(19) Europäisches Patentamt
European Patent Office
Office européen des brevets

(11) Publication number: 0 358 949 A2

(12) **EUROPEAN PATENT APPLICATION**

(21) Application number: 89114724.1

(51) Int. Cl.5: C09D 5/36 , B05D 5/06

(22) Date of filing: 09.08.89

(30) Priority: 15.09.88 US 246237

(43) Date of publication of application: 21.03.90 Bulletin 90/12

(84) Designated Contracting States: AT BE CH DE ES FR GB GR IT LI LU NL SE

(71) Applicant: BASF CORPORATION
Coatings & Colorants Division 1255 Broad Street
Clifton New Jersey 07015-6001(US)

(72) Inventor: Panush, Sol
28670 Oak Crest Drive
Farmington Hills Michigan 48018(US)
Inventor: Gelmini, James M.
32453 Revere
Warren Michigan 48092(US)

(74) Representative: Leifert, Elmar, Dr.
BASF Lacke + Farben AG Patentabteilung
Max-Winkelmann-Strasse 80 Postfach 61 23
D-4400 Münster(DE)

# (54) Multi-layer opalescent coatings containing pearlescent pigments and dyes.

(57) A substrate material coated with a multi-layer coating composition and a method of coating the substrate material with a multi-layer coating composition. The multi-layer coating composition consists of an inner pigmented film-forming base coat. An intermediary transparent film-forming coating is applied over the base coat, the intermediary coating comprising a blend of iron oxide encapsulated mica pigment in a pigment to binder ratio of about .001 to about .35, and up to about 50 wt.% based upon the weight of the pigment dye of a metal organic complex dye selected from the group consisting of 1:2 cobalt metal organic complex dyes and 1:2 chrome metal organic complex dyes. An outer film-forming transparent top coat coating composition is the third component of the multi-layer coating and is applied over the intermediary coat. The resulting multi-layer coating composition when cured or dried to a hard, durable film on a substrate has an opalescent appearance, and a stained glass glow color effect.

EP 0 358 949 A2

# MULTI-LAYER OPALESCENT COATINGS CONTAINING PEARLESCENT PIGMENTS AND DYES

## Technical Field

The field of art to which this invention pertains is coatings, coating methods, and the resultant coated articles.

## Background Art

Multi-coat, multi-layer coating systems are well-known in the coatings industry. U.S. Patent No. 3,639,147 which is incorporated by reference discloses multicoat coating compositions comprising a pigmented film-forming base coat and a clear top coat. The multi-coat coating compositions are known to have superior aesthetic appearance combined with superior durability.

There is a constant search in this aret for new and improved multi-layer coating systems for use as exterior coatings on automobiles. U.S. Patent No. 4,539,258 which is incorporated by reference discloses substrates coated with opalescent multi-layer coatings. The coatings comprise an inner base coat having a non-metallic primary color value of N-4 to N-8 on the Munsell color chart. Applied to the base coat is an intermediary coat comprising a transparent interference coat. This interference coat consists of a polymeric binder containing metal oxide encapsulated mica particles with a particle to binder ratio of 0.06 to 0.13. Over the intermediary coat is deposited an outer, transparent protective clear coat. The three layers of the multi-layer coating produce a unique opalescent color effect on a substrate material. U.S. Patent No. 4,615,940 discloses primer produced opalescent coatings. The disclosures of both of these patents are incorporated by reference.

U.S. Patent No. 4,598,020, discloses multi-layer coating compositions wherein the transparent top coat composition comprises a thermosetting resin material containing a pigment composition and a soluble dye. The pigment composition comprises iron oxide encapsulated mica particles and a soluble 1:2 chrome or 1:2 cobalt metal organic complex dye. The coatings have improved pearlescent color effects, improved depth and clarity and surprising and unexpected resistance to face from ultraviolet light.

What is needed in this are are new multi-coat coating compositions having improved aesthetic appearance and improved coating characteristics, such as durability and resistance to ultraviolet degradation.

## Disclosure of Invention

A substrate coated with a multi-layered coating is disclosed. The coating comprises an inner pigmented film-forming base coat applied to a substrate. An intermediary film-forming coating composition is applied over the base coat. The intermediary coating composition comprises iron oxide encapsulated mica pigment in a pigment to binder ratio of about .001 to about .35 blended with a metal organic complex dye selected from the group consisting of 1:2 cobalt metal organic complex dyes and 1:2 chrome metal organic complex dyes. The metal organic complex dye is present in an amount up to 50.0 wt. % based upon the weight of the mica pigment and dye. A third outer transparent film-forming top coat is applied over the intermediary coat. The resulting cured, hard, durable multi-layer coating composition has an opalescent appearance, and a stained glass glow color effect.

Yet another aspect of the present invention is a method of coating a substrate material by applying a multi-layer coating composition. Initially at least one layer of an inner pigmented film-forming base coat is applied directly to the substrate. Then, an intermediary film-forming coating is applied over the base coat. The intermediary coating comprises a blend of iron oxide encapsulated mica pigment in a pigment to binder ratio of about .001 to about .35, and, up to about 50.0 wt.% of a metal organic complex dye. The amount of dye is based upon the weight of the mica pigment and dye. The dye is selected from the group consisting of 1:2 cobalt metal organic complex dyes and 1:2 chrome metal organic complex dyes. Next, an outer transparent film-forming top coat coating composition is applied over the intermediary coat. The applied coatings are cured to hard, durable films thereby producing an opalescent color effect on the substrate material, as well as a stained glass glow color effect.

The foregoing and other features and advantages of the present invention will become more apparent from the following description.

Best Mode for Carrying Out the Invention

While any substrate material can be coated with the coating compositions according to the present invention, including such things as glass, ceramics, asbestos, wood, and even plastic material depending on the specific drying and/or curing requirements of the particular composition, the coating system of the present invention is particularly adapted for metal substrates, and specifically as an automotive paint finish system. The substrate may be bare substrate material or can be conventionally primed, for example, to impart corrosion resistance. The coating of the present invention can also be applied over other conventional coatings. Exemplary metal substrates include such things as steel, aluminum, copper, magnesium, alloys thereof, etc. The components of the composition can be varied to suit the temperature tolerance of the substrate material. For example, the components can be so constituted for air drying (i.e. ambient), low temperature cure (e.g. below - 180° F), or high temperature cure (e.g. over 180° F).

The basecoat material, i.e. the pigmented polymer layer closest to the substrate, and the intermediary coat material comprise any suitable film-forming material conventionally used in this art, or equivalents thereof, including acrylics, alkyds, polyurethanes, polyesters and aminoplast resins. The terms intermediary coat and interference coat are used interchangeably herein. When referring to polymer systems useful in the basecoat, it will be understood that the same polymers are useful in the intermediary coat. Although the base coat can be deposited out of an aqueous carrier, it is more typical to use conventional volatile organic solvents such as aliphatic, cycloaliphatic and aromatic hydrocarbons, esters, ethers, ketones and alcohols including such things as toluene, xylene, butyl acetate, acetone, methyl isobutyl ketone, butyl alcohol, etc.

When using volatile organic solvents, it is optional to include from about 2% to about 50% by weight of a conventional cellulose ester and/or conventional wax which facilitates quick release of the volatile organic solvent resulting in improved flow or leveling out of the coating after application. The cellulose esters used must be compatable with the particular resin systems selected and include such things as cellulose nitrate, cellulose propionate, cellulose butyrate, cellulose acetate butyrate, cellulose acetate propionate, and mixtures thereof. The cellulose esters when used are preferably used in an amount of about 5% to about 20% by weight based on film-forming solids. The base coat and intermediary coat coating compositions will preferably contain sufficient amounts of microparticle rheology control agents. Examples of these microparticle rheology control agents are disclosed in U.S. Patent Nos. 3,365,414, 4,290,932, 4,377,661, 4,414,357, and 4,447,536 which are incorporated by reference.

Preferably, about 2.0 weight percent to about 20 weight percent of the microparticles based upon the weight of the film-forming solids is included in a coating formulation.

The acrylic resins useful in the base coat are typically thermosetting. Acrylic lacquers such as are described in U.S. Patent No. 2,860,110 are one type of film useful as the base coat. The acrylic lacquer compositions typically include homopolymers of methyl methacrylate and copolymers of methyl methacrylate which contain among others, acrylic acid, methacrylic acid, alkyl esters of acrylic acid, alkyl esters of methacrylic acid, vinyl acetate, acrylonitrile, styrene and the like.

Another type of film-forming material useful in forming the base coat of this invention is a combination of a cross-linking agent and a carboxy-hydroxy acrylic copolymer. Monomers that can be copolymerized in the carboxy-hydroxy acrylic copolymer include esters of acrylic and methacrylic acid with alkanols containing 1 to 12 carbons atoms, such as ethyl acrylate, methyl methacrylate, butyl acrylate, butyl methacrylate, 2-ethylhexyl acrylate, lauryl methacrylate, benzyl acrylate, cyclohexyl methacrylate, and the like. Additional monomers are acrylonitrile, methacrylonitrile, styrene, vinyl toluene, alpha-methyl styrene, vinyl acetate, and so forth. These monomers contain one polymerizable ethylenically unsaturated group and are devoid of hydroxyl and carboxylic groups.

The cross-linking agents used in combination with the hydroxy-carboxy copolymers are those compositions which are reactive with hydroxy and/or carboxylic acid groups. Examples of such cross-linking agents are polyisocyanates (typically di-and/or tri- isocyanates) polyisocyanates, polyepoxides and aminoplast resins. Particularly preferred cross-linking agents are the aminoplast resins.

The polyisocyanates when reacted with hydroxyl bearing polyester or polyether or acrylic polymers will yield urethane films useful in the process of this invention in the base coat, intermediary coat, and topcoat. The isocyanate (-NCO) - hydroxyl (-OH) reaction takes place readily at room temperature, so that coating compositions having ambient and low temperature cure are possible.

Among other base coats which are typically used in the processes of the present invention are those commonly known as alkyd resins which are defined to include fatty acid or oil containing esterification products. The methods for preparing these resins are well known in the art.

The preferred alkyd resins useful in this invention are those containing from about 5 to about 65 weight percent of a fatty acid or oil and having a hydroxyl equivalent to carboxy equivalent ratio of from about 1.05

to 1.75. Alkyd resins having less than about 5% fatty compound are classified as the "oil-less" alkyd resins or polyester resins described hereinafter. On the other hand, alkyd resins containing greater than 65% of a fatty compound exhibit poor baking properties, poor chemical resistance and unsatisfactory adhesion to either the base coat or the substrate. When the hydroxyl to carboxyl equivalent ratio is less than about 1.05 gelation can result during polymer preparation while resins prepared having a ratio in excess of 1.75 have low molecular weights and, therefore poor chemical resistance.

These alkyd resins can also be used as the topcoat of this invention. When this is the case, it is preferred that the oil or fatty acid portion of the alkyd resin contain a light colored baking oil or fatty acid such as coconut or dehydrated castor oils or fatty acids. Furthermore, when these resins are used as topcoats they can be reacted with various acrylic or ethylenically unsaturated monomers as described above to produce vinyl modified alkyd resins.

Curing of these alkyd resins can be accomplished by blending with any of the previously described cross-linking agents in the same weight ratios as are used with carboxy-hydroxy copolymers.

Included among the various fatty acids and oils useful in preparing these alkyd resins are the fatty acids derived from the following oils: castor, dehydrated castor, coconut, corn, cottonseed, linseed, oticica, perilla, poppyseed, safflower, soybean, tung oil, etc., and the various rosins containing tall oil fatty acids. Useful polyols include the various glycols, such as ethylene glycol, propylene glycol, neopentyl glycol, butylene glycol, 1,4 butanediol, hexylene glycol, 1,6 hexanediol, the polyglycols such as diethylene glycol or triethylene glycol, etc.; the triols such as glycerine, trimethylol ethane, trimethylol propane, etc., and other higher functional alcohols such as pentaerythritol, sorbitol, mannitol, and the like. Acids useful in preparing the alkyd resins of this invention include mono-functional acids such as rosin acids, benzoic acid, para tertiary butyl benzoic acid, and the like; the polyfunctional acids such as adipic acid, azelaic acid, sebacic acid, phthalic acid or anhydride, isophthalic acid, terephthalic acid, dimerized and polymerized fatty acids, trimellitic acid, and the like.

Yet another useful base coat is prepared using nonaqueous dispersions such as are described in U.S. Patents Nos. 3,050,412; 3,198,759; 3,232,903; and 3,255,135. Typically these dispersions are prepared by polymerizing a monomer such as methyl methacrylate in the presence of a solvent in which polymers derived from the above monomer are insoluble and a precursor which is soluble in the solvent. Nonaqueous dispersions can have a relative solution viscosity as previously defined of about 1.05 to 3.0. Dispersions having a relative solution viscosity in excess of about 3.0 are difficult to spray and have high coalescence temperatures while dispersions with a relative solution viscosity less than about 1.05 have poor resistance, durability and mechanical properties. The monomers useful in preparing the above dispersed copolymers or homopolymers are those listed previously as useful in forming the carboxy-hydroxy acrylic copolymers.

In another instance the base coat film can be produced from resins known as polyesters or "oil-less" alkyd resins. These resins are prepared by condensing non-fatty containing polyols and polyacids. Included among the useful polyacids are isophthalic acid, phthalic acid or anhydride, terephthalic acid, maleic acid or anhydride, fumaric acid, oxylic acid, sebacic acid, azelaic acid, adipic acid, etc. Mono basic acids such as benzoic, para tertiary butylbenzoic, and the like can also be utilized. Among the polyalcohols are the diols or glycols such as propylene glycol, ethylene glycol, butylene glycol, 1,4 butanediol, neopentyl glycol, hexalene glycol, 1,6-hexanediol, and the like; the triols such as trimethylol ethane, trimethylol propane and glycerine and various other higher functional alcohols such as pentaerythritol.

Any of the above-recited polymers and any polymers conventionally used, in this art, or equivalents thereof, including water-based systems and solvent based systems, may be used as the topcoat, as long as it provides a transparent film. The term "transparent film" is defined as a film through which the underlying coats can be seen. It is preferred that the transparent film contain at least one UV absorbing compound and/or a hindered amine UV stabilizer and be substantially colorless so that the full polychromatic and aesthetic effect of the base coat and the intermediary coat is not substantially decreased. However, in some instances, desirable and unique styling effects can be obtained by the addition of contrasting or complementary colors to the topcoat. An outstanding feature of a pigmented base coat/intermediary coat/clear top coat system is the significant improvement in the durability which is provided to the overall coating composition.

In all instances where the methods and compositions of the present invention are used, extremely high gloss films result. In fact, using the processes and coatings of this invention, gloss readings in excess of 100 are readily obtained.

The iron oxide encapsulated mica pigments according to the present invention are commercially available from the Mearl Corporation, New York, New York, and EM Industries, Hawthorne, New York, and range in color from golden bronze at the thinnest iron oxide encapsulation through copper, to red at the thickest iron oxide encapsulation. The iron oxide coatings on these pigments being transparent act as

natural ultraviolet absorbers. For additional exterior durabilty (e.g. exposure to the sun) minor amounts of other additives such as chromium hydroxide, chrome complex polymers, and titanium dioxide may be included in the iron oxide encapsulation layer. It should also be noted that other high temperature stable metal oxides (such as copper, calcium, cadmium, cobalt, barium, strontium, manganese, magnesium tin and lithium) can be submitted in whole or in part for the encapsulating iron oxide. The iron oxide encapsulation layer is generally in the molecular range of thicknesses; this layer may typically represent about 10% to about 85% by weight of the total weight of the encapsulated mica particle, more typically about 20% to about 60%, and preferably about 29% to about 48% by weight. If additives such as titanium dioxide, chromium hydroxide, or chrome polymer complexes are used as part of the encapsulation layer they are generally present in amounts sufficient to provide durability such as, for example, an amount of about 1% to about 35% by weight, and typically about 2% to about 5% for the titanium dioxide, and about 0.1% to about 3.5% by weight for the chromium hydroxide, based on total weight of the encapsulated particle.

The uniformity of shape (platelet) and smoothness of the iron oxide encapsulated mica pigment according to the present invention (e.g., as compared to the highly fragile, three dimensional and complicated configuration of aluminum flake, a standard in the automotive paint industry) eliminates the problem of color drift due to the shear forces (yielding fragmentation problems) present during the handling of the aluminum flake containing paint (overhead pumping facilities) and application problems of ghosting, mottling, silkiness and repair color matching associated with aluminum flake paints.

The iron oxide encapsulated mica pigments are optically pearlescent because their transparency permits light to pass through the particle resulting in a multiplicity of refractions and reflections. In addition to their pearlescence these pigments have inherent hiding capabilities, are additive colors and retain a metallic appearance (face to flop color travel). These features provide the capability of producing colors with depth, clarity and chromaticity not previously attainable with conventional metals (i.e. aluminum) and previous pearlescent pigments (natural or synthetic) which produced colors lacking depth and chromaticity or color travel due to the aesthetics of the metal component (aluminum) or pearl. These colorless and opaque pigments reduced the value (color intensity) of the "true" colored pigments be they organic or inorganic resulting in gray-cloudy-low chroma colors. The addition of the iron oxide encapsulated mica pigments provides hiding and depth to travel with the aesthetically pearlescent appearance.

The iron oxide encapsulated mica pigments are carefully screened and controlled particles. Different sized mica particles will produce different aesthetic appearances. The standard metallized effect utilizes mica pigment having a particle size all within about 5 microns to about 60 microns (preferably about 5 microns to about 45 microns, and typically about 5 microns to about 35 microns) in their largest dimension, and about 0.25 micron to about 1.0 micron in thickness. A satin-like appearance is obtained by using mica pigment having a particle size of about 5 microns to about 40 microns (more typically about 5 microns to about 30 microns and preferably about 5 microns to about 20 microns). The closely controlled particle size provides the transparent, translucent, reflective and refractive features establishing improved aesthetic and physical properties of these coatings through careful selection and blending of these pigments. In a mixture with conventional colored pigments (organic or inorganic) or dyes (natural or synthetic) unique pearlescent colors can be produced. Blending complementary colors (e.g. red iron oxide encapsulated mica with red pigments or dyes) will produce deep chromatic colors while blending contrasting colors (e.g. bronze iron oxide encapsulated mica with red or blue pigments or dyes) will produce highly chromatic colors with unique undertones. Regardless of the selection, the final (clear coated) enamel will have improved color durability, greater moisture resistance and greater acid resistance than coatings prepared with conventional metals or synthetic pearls.

Conventional metallic flake pigments such as aluminum paste can be added to the base coats of the present invention to increase the hiding of the substrate surface. The addition of small quantities of metallic flake pigments does not affect the fade-free characteristics of the coating compositions of the present invention, however, it produces a metallic effect which is between the conventional metallic appearance and the metallic appearance of the base coats containing coated mica pigment. Examples of the conventional metallic pigments which may be used in the base coats of the present invention include conventional aluminum flake pigments produced by Silberline Alcoa, Alcan, Reynolds, Eckart, Toyo, etc., referred to as a paste, ranging from 55 to 80% nonvolatile in solvent (i.e. mineral spirits, VM&P naptha, etc.).

The dyes which may be used in the intermediary or interference coats of the present invention include any 1:2 chrome or 1:2 cobalt metal organic complex dyes, examples of which are listed in the Table.

TABLE

| C.I. Solvent | Description |
|---|---|
| Yellow 88 | 1:2 chromium complex of an organic molecule with methyl, hydroxyl, and carboxy groups; - neutralized with a branched aliphatic amine with 12 to 14 carbon atoms. |
| Yellow 89 | 1:2 cobalt complex of an organic molecule with methyl, chloride, hydroxyl, and methylsulfonyl groups; - stabilized with dehydroabietylamine. |
| Yellow 25 | 1:2 cobalt complex of an organic molecule with nitro, hydroxyl, and carboxy groups; - neutralized with soda. |
| Orange 59 | 1:2 chromium complex of an organic molecule with methylsulfonyl, methyl, chloride and hydroxyl groups; - stabilized with dehydroabietylamine. |
| Orange 11 | 1:2 cobalt complex of an organic molecule with nitro, hydroxyl, and methyl groups; - neutralized with soda and cyclohexylamine. |
| Red 9 | 1:2 cobalt complex of an organic molecule with sulfamide and hydroxyl groups; - stabilized with i-propylamine. |
| Black 29 | 1:2 chromium complex of an organic molecule with nitro, hydroxyl, and amyl groups; - neutralized with soda. |

| C.I. Solvent | Description |
|---|---|
| Violet 24 | 1:2 cobalt complex of an organic molecule with hydroxyl, chloride, and sulfomethylamide groups; - stabilized with cyclohexylamine. |

The chromium or cobalt complex dyes useful in the practice of this invention will comprise any 1:2 chromium or 1:2 cobalt complex organic dye. Chrome complex dyes which can be used in the coatings of the present invention include these disclosed in U.S. Patent No. 4,340,536.

The 1:2 chrome and 1:2 cobalt metal organic complex dyes are well-known in the art, for example, 1:2 chrome and 1:2 cobalt metal organic complex dyes are disclosed in U.S. Patent No. 1,325,841. The dyes are manufactured by reacting or complexing chromium or cobalt with any organic moiety which will complex with the metal in solution, and the complexes are then neutralized and stabilized. Examples of such organic moieties includes phenolic derivatives, pyrazalones, monoazo, disazo, naphthols, and imidazilone. Examples of conventional stabilizers include branched aliphatic amines with 12 to 14 carbon atoms, soda, isopropylamine, cyclohexylamine, dehydroabietylamine.

Additional 1:2 chrome and 1:2 cobalt metal organic complex dyes which may be used in the practice of this invention include Solvent Yellow 82 C.I. 18690, Solvent Red 118 C.I. 15675, and Solvent Black 27 C.I. 12195 + 12197 all of which are chromium complexes containing 1 atom of chromium to 2 mol. dye. These dyes are commercially available from BASF Corporation, Cincinnati, Ohio under the ZaponTM trademark, and have the following structure:

1) Solvent Yellow 82 ZAPONTM Yellow 157

A chromium complex of

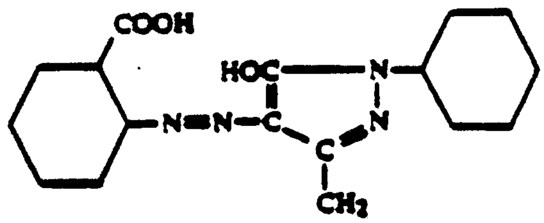

Anthranilic acid -- 3-Methyl-1-phenyl-5-pyrazolone; then heat with chromium formate in formamide solution for 6 hours at 113-115 °C to form the chromium complex which contains 1 atom of chromium per 2 mol. dye.

2) Solvent Red 118 ZAPONTM Red 471

A chromium complex derived from

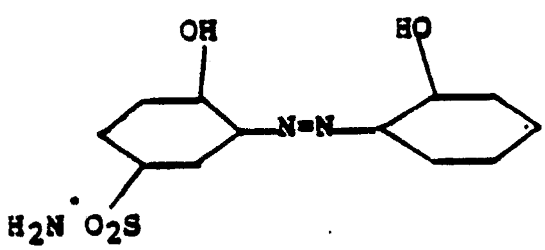

2-Amino-1-phenol-4-sulfonamide -- 2-Naphthol; then convert to the chromium complex containing 1 atom of chromium to 2 mol. monoazo dye.

3) Solvent Black 27 ZAPONTM Black X51

A chromium complex of

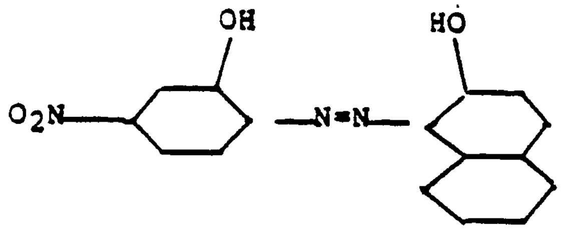

2-Amino-5-nitrophenol -- 2-Naphthol; then convert to the chromium complex containing 1 atom of chromium to 2 mol. monoazo dye.

Additional examples of 1:2 cobalt metal organic complex dyes useful in the practice of the present invention include dyes disclosed in European patent application EP 113,643, filed on July 18, 1984 and German Offenlegungsschriftde 3230102A1. Examples of 1:2 chrome metal organic complex dyes useful in the practice of this invention are also disclosed in U.S. Patent No. 4,349,536. Additional examples of commercially available 1:2 cobalt and 1:2 chrome metal organic complex dyes useful in the practice of this invention include Orasol™ Yellow 2GLN (Solvent Yellow 88), Orasol™ Yellow 2RLN (Solvent Yellow 89), Orasol™ Yellow 3R (Solvent Yellow 25), Orasol™ Orange G (Solvent Orange 11), Orasol™ Orange RLN (Solvent Orange 59), Orasol™ Red 2B (Solvent Red 9), Orasol™ Violet RN (Solvent Violet 24), and Orasol™ Black RL (Solvent Black 29). These dyes are manufactured by Ciba-Gigy, Greensboro, North Carolina, under the Orasol™ trademark.

Additional dyes useful in the practice of the present invention include Orange RLS dye and Yellow GL dye manufactured by Mobay/Bayer, Pittsburg, Pennsylvania; Red 471, Yellow 073 and Orange 245 dyes manufactured by BASF Corporation, Holland, Michigan; Yellow RLSN, Black RLS and Blue RLS dye manufactured by Sandoz Corp., East Hanover, New Jersey; and Yellow 2RLN,Orange RLN and Orange G manufactured dyes by Ciba-Gigy, Greensboro, North Carolina.

The amount of pigment present in the base coat of the multicoat coatings of the present invention generally comprises about 1% to about 25% by weight, preferably about 7.5% to about 15% and typically about 10% by weight. The base coat can be non-metallic or metallic. By metallic it is meant the base coat can have a metallic appearance due to the presence of metal flake or mica pigments or combinations thereof. Optionally, about 5% to about 90% of this pigment is the iron oxide encapsulated mica or metallic flake, preferably about 25% to about 70% and typically about 60% by weight.

The pigment (by pigment with regard to the intermediary coat is meant mica pigment plus dye) to binder ratio of the intermediary coat will typically be about .001 to about .35, more typically about .005 to about .175, and preferably about .025 to about .100.

The amount of dye in the intermediary coat typically comprises from up to about 1.0% to about 50.0 by weight of all pigments and dye in the intermediary coat, and preferably up to about 15.0% to about 35.0% of all pigments and dyes in the intermediary coat.

The amount of iron oxide coated mica contained in the intermediary coat is typically present in a pigment to binder ratio of about 1:1 to about 99:1, and preferably about 2:1 to about 3:1.

The novel three layer coating compositions of the present invention incorporate 1:2 chrome or 1:2 cobalt organic complex soluble dyes in the intermediary coat to produce an aesthetic appearance which can be described as similar to that of stained glass or tiffany lamps where transparency and translucency yield a panorama of color with clarity and depth not previously achieved in OEM automotive finishes. This effect is defined as a "stained glass" glow effect". Mica pigments incorporated into automotive paints as a replacement for aluminum flake produce a metallic-like effect without the disadvantages of aluminum flake such as milky and washed out color, mottling, lack of depth, etc. It was known in the art that organic dyes are unacceptable as a component of automotive paints containing aluminum flake pigment since the dyes are "fugitive" and will rapidly fade upon exposure to ultraviolet light. It is surprising and unexpected as disclosed in U.S. Patent No. 4,598,020 that soluble 1:2 chrome and 1:2 cobalt organic complex dyes, when added to the iron oxide coated mica particle pigment-containing coating composition of the present invention, will produce fade-free compositions. The three-layer coatings of the present invention, wherein the intermediary layer contains iron oxide encapsulated mica pigments and soluble 1:2 chrome and 1:2 cobalt organic complex dyes, are observed to have an appearance characterized by transparency, translucency, brilliance, chromaticity, and depth opalescence and stained glass glow effect. It is believed that the novel characteristics of the coatings of the present invention are due to the additive effect of the dye and mica pigment in the interference (intermediary) coat to produce these improved characteristics. The pigment and dye reinforce each other producing intensified colors. On the other hand, it is known that

aluminum flake is subtractive and will decrease the chromaticity of a dye by shifting the color to a grayer (i.e. dirtier) tone away from the pure color.

The base coat, intermediary (interference) coat, and the topcoat can be applied by any method in this art including conventional methods such as brushing, spraying, dipping, flow coating, etc. Typically spray application is used, especially for automotive finishing. Various types of spraying can be utilized such as compressed air spraying, electrostatic spraying, hot spraying techniques, airless spraying techniques, etc. Application can be done by hand or by machine.

Prior to application of the coating materials of the present invention, a conventional corrosion resistant primer has typically been applied. To this primed substrate is applied the base coat, although the three-layer coating of the present invention may be applied to bare substrate or any coated surface. The base coat is typically applied at a thickness of about 0.4 mil to about 1.8 mil, and preferably about 0.5 mil to about 0.8 mil (on a dry film basis). The thickness of the base coat, intermediary coat, and top coat can be produced in a single coating pass or a plurality of passes with very brief non-curing drying ("flash") between applications of coats.

Once the base coat has been applied, the intermediary coat is applied after optionally allowing the base coat to flash for about 30 seconds to about 10 minutes, preferably about 1 to 3 minutes. The intermediary coat is typically applied at a thickness of about 0.8 mil to about, preferably about 1.0 mil (on a dry film basis).

After the intermediary coat has been applied, the outer transparent top coat is then applied (after optionally allowing the intermediary coat to flash at ambient temperature for about 30 seconds to about 10 minutes, preferably about 1 to about 3 minutes). While the base coat and intermediary coat can be dried for longer periods of time, even at higher temperatures, or even cured, a much improved product is produced by application of the transparent topcoat after only a brief flash. Some drying out of the base coat and intermediary coat is necessary to prevent total mixing of the base coat, the intermediary coat, and the topcoat. However, a minimal degree of base coat-intermediary coat interaction, and, intermediary coat/top coat interaction is desirable for improved bonding of the coatings. The topcoat is applied thicker than the base coat (preferably about 1.8 to 2.3 mils on a dry film basis) and can also be applied in a single pass or multiple passes. It should also be noted that the iron oxide encapsulated mica pigments may be contained at low levels in the clear coat, thereby producing unique aesthetics, while retaining the pearlescent appearance.

Pigment control is retained in the base coat while it is being overcoated with the intermediary coatings. This is evidenced by lack of "strike-in" or migration of the two films (the base coat and intermediary coat) into each other. Pigment control is also maintained between the intermediary coat and the clear, outer top coat. When "strike-in" occurs, pigments move from the base coat into the intermediary coat or from the intermediary coat into the top coat, and the film compositions thereby become intermixed at the interfaces. The resulting cured coating composition exhibiting "strike-in" has a dusty appearance rather than a clean "depth" appearance. By this invention, substantially no "strike-in" occurs, and the coatings have outstanding clarity and depth. However, sufficient wetting takes at the interfaces so that no problems of delamination and solvent release from any of the coatings are present.

Once the topcoat is applied the system is again optionally flashed for about 30 seconds to 10 minutes and the three coatings are then baked at temperatures sufficient to drive off all of the solvent in the case of thermoplastic layers and at temperature sufficient to cure and cross-link in the case of thermosetting layers. These temperatures can range anywhere from ambient temperature to about 400°F. Typically in the case of thermosetting material, temperatures of about 225°F to about 280°F (e.g. 250°F) are used, (e.g. for about 30 minutes). As previously mentioned, although a conventional "wet-on-wet" application process is preferred, outstanding results are also obtained by applying the coatings in a conventional "bake-on-bake" application process wherein each layer is baked prior to application of the next layer.

The following examples are illustrative of the principles and practice of this invention although not limited thereto. Parts and percentages where used are parts and percentages by weight.

**EXAMPLE 1**

A base coat/polymer composition was prepared by blending the following components in a conventional vessel and mixing means

| | |
|---|---|
| Acrylic Copolymer (1) | 44.20 |
| Resimene® x 755 | |
| Crosslinking Resin (2) | 44.20 |
| Microgel Thermosetting Acrylic | 9.38 |
| Nonaqueous Dispersion (NAD) (3) | |
| Nacure® 5225-Special Purity (4) | 1.28 |
| U.V. Absorber (5) | 0.49 |
| | 100.0 at 40% |
| | Total Non Volatiles (TNV) |

(1) Copolymer

1.40% Styrene
51.24% Iso Butyl Methacrylate
1.40% 2-Ethyl Hexyl Methacrylate
14.00% Hydroxy Ethyl Acrylate
1.96% Acrylic Acid
20.00% E-Caprolactone
100.00 at 72.5% TNV

Solvent Carrier

62.2% Solvesso" 100
31.1% N-Butyl Alcohol
6.7% Methyl Ethyl Ketone
100.0

(2) Manufactured by Monsanto, St. Louis, Missouri

(3) NAD

75.8 Methyl methacrylate
10.2 Hydroxy Propyl Methacrylate
5.5 Glycidyl Methacrylat
4.1 Methacrylic Acid
4.4 Poly 12"-Hydroxy Stearic Acid
100.0

SOLVENT CARRIER

92.50 Shell Sol" M-514 (A)
2.50 Toluene
2.50 N-Butyl Acetate - Urethane Grade
2.50 Ethyl Acetate
100.0

(A) Shell Chemical Co, Oak Brook, Illinois

(4) Manufactured by King Industries, Norwalk, Connecticut

(5) 12.50% Tinuvin"900 manufactured by Ciba Geigy, Greensboro, North Carolina.

A pigment base was prepared by blending L1110 inorganic metal oxide yellow pigment manufactured by BASF Corporation, Holland Michigan with the base coat polymer.

A sufficient amount of the pigment base was blended with the basecoat/intermediary coat polymer composition to form a base coat coating composition having a Pigment to Binder Ration (P/B) of 0.8.

An intermediary coat polymer was prepared by blending the following components in a conventional mixing vessel and mixing means

| | |
|---|---|
| Acrylic Copolymer (1) | 46.17 |
| Resimene™ x 755 | 42.24 |
| NAD (2) | 9.82 |
| Nacure™ 5225 - Special Purity | 1.28 |
| U.V. absorber (3) | 0.49 |
| | 100.0 at 50.9% TNV |

(1) Same as base coat acrylic copolymer
(2) Same as base coat NAD
(3) Same as base coat ultraviolet light absorber.

The intermediary coat was prepared by initially preparing an intermediary coat pigment base. The pigment base was prepared by Bronze mica pigment (9-500) manufactured by E. M. Chemical, and blending RLN Orange Dye manufactured by Ciba Gagy with the intermediary coat polymer in accordance with the following ratio:
Bronze Mica pigment 3.81 pounds
Orange Dye 1.27 pounds

The intermediary coating was then prepared by blending the pigment base with the intermediary coat polymer to form the transparent intermediary coating haveing a P/B ratio of 0.10.

A clear top coat coating composition was prepared by blending the following components:

| | |
|---|---|
| Acrylic Copolymer (1) | 65.00 |
| Cymel™ 303 | 35.00 |
| Crosslinking resin (2) | ______ |
| | 100.00 at 60% TNV |

Tinuvin™ 440 (3) at 1.2% on S.V.

(1) Copolymer

| | |
|---|---|
| Styrene | 10.00 |
| Butyl Methacrylate | 33.00 |
| Butyl Acrylate | 20.00 |
| Hydroxy Ethyl Acrylate | 35.00 |
| Acrylic Acid | 2.00 |
| | 100.0 at 65% TNV |

Carrier

| | |
|---|---|
| 80.00 | Amyl Acetate |
| 20.00 | Solvesso™ 100 |
| 100.00 | |

(2) American Cyanamid, Wayne, New Jersey

(3) Ciba-Geigy, Greensboro, North Carolina

Bonderized steel panels were primed with a corrosion resistant primer and cured. The primed steel panels were sprayed with the base coat paint composition to a film thickness of about 0.6 mil on a dry film basis. After a flash of an approximately 30 to 180 second at room temperature, an additional 0.6 mil film of the base coat paint composition, again as measured on a dry film basis, was applied by spraying. After a 30 to 180 second flash, the intermediary coating was applied in a similar manner in two applications to a dry film thickness of 1.0 mil. After a flash of about 30 to 180 seconds at room temperature, a transparent top coating was then applied over the intermediary coating by spraying in two coats to a film thickness on a dry film basis of about 2.2 mil. After drying for 15-30 minutes at room temperature, the coating was baked (cured) at 250° F for 30 minutes. The resulting coating had an opalescent appearance, exhibiting superior clarity and durability and, produced a stained glass glow color effect.

In the following examples coating compositions were made and applied in accordance with the procedure of Example 1. Only the pigment compositions of the base coats and intermediary coats varied. All of the test panels surprisingly exhibited opalescence and stained glass glow color effect.

| EXAMPLE 2 | |
|---|---|
| A) Base Coat Pigment Base - Pigment Ratio | |
| Blue Pigment (B4714) manufactured by Mobay<br><br>Titanium Dioxide white pigment (R960HGHG) manufactured by DuPont Corporation, Wilmington, Delaware<br>Base Coat Coating P/B - 0.8<br>Thickness of Base Coat - 1.0 mil (dry film basis). | 11.00 pounds<br>11.00 pounds |
| B) Intermediary Coat Pigment Base - Pigment Ratio | |
| Bronze mica pigment (9-500) manufactured by E. M. Chemical Co.<br>Blue dye manufactured by BASF Corporation<br><br>Intermediary Coating P/B<br>Thickness of Intermediary Coating (dry film basis) | 0.95 pounds<br>0.32 pounds<br>0.1<br>0.9 mil. |
| C) Clear Coat | |
| Thickness of Clear Coat (dry film basis) | 1.8 mils. |

| EXAMPLE 3 | |
|---|---|
| A) Base Coat Pigment Base - Pigment Ratio | |
| Red Brown (RO8097) pigment manufactured by Pfizer, Inc. New York, N.Y.<br>Base Coat Coating P/B<br>Thickness of Base Coat (dry film basis) | 22.00 pounds<br>0.8<br>0.8 mil |
| B) Intermediary Coat Pigment Base - Pigment Ratio | |
| Copper mica (9-502) manufactured by E. M. Chemical<br>2RLN orange Dye manufactured by Ciba Geigy<br>Intermediary Coating P/B -<br>Thickness of Intermediary Coating (dry film basis) | 0.95 pounds<br>0.32 pounds<br>0.025<br>0.8 mil. |
| C) Clear Coat | |
| Thickness of Clear Coat (dry film basis) | 2.2 mils. |

| EXAMPLE 4 | |
|---|---|
| A) Base Coat Pigment Base - Pigment Ratio | |
| Yellow iron Oxide (#1050) manufactured by Columbian Chemical Co., Akron, Ohio<br>Base Coat P/B<br>Thickness of Base Coat (dry film basis) | 22.00 pounds<br>0.8<br>1.2 mils |
| B) Intermediary Coat Pigment Base - Pigment Ratio | |
| Red Mica pigment (9-504) manufactured by E. M. Chemical<br>Violet RN Purple Dye manufactured by Ciba Geigy<br>Intermediary Coating P/B<br>Thickness of Intermediary Coating (dry film basis) | 0.95 pounds<br>0.32 pounds<br>0.1<br>2.1 mils. |
| C) Clear Coat | |
| Thickness of Clear Coating (dry film basis) | 2.1 mils. |

The compositions and processes according to the present invention provide many improvements over the paint compositions and processes of the prior art. It is surprising and unexpected that the application of a transparent (low P/B) intermediary coat containing coated mica pigment and organic dyes over a base coat of similar or complementary color, and overcoated with a clear topcoat, produces not only a full panorama of color, but also yields colors that range the full spectrum of non-metallic, ceramic, and metallic with varying degrees of opalescence. By utilizing the coating compositions and processes of the present invention, it is possible to obtain coating compositions characterized by ultraviolet durability, acid resistance, moisture resistance, flexibility, stained glass appearance and opalescence. The coatings are applicable under all current electrostatic and non-electrostatic conditions in all current technologies. The transparancy of the intermediary of interference coat (either similar or complementary in color to the base coat) is responsible for the novel and unexpected characteristics of the coatings of the present invention through the selective absorption, reflection or refraction of light through the transparent intermediary coat. Transparency of the intermediary coat is defined to mean pigment and dye in the transparent intermediary coat present in a low pigment-to-binder ratio as previously described. The dye, when incorporated into the intermediary thermosetting polymer composition and subjected to heat sufficient to cure the thermosetting polymer, "reacts" with the polymer becoming an integral part of the system eliminating the natural "bleeding" tendency of the dye and becoming insoluble in the enamel. This dye dissolved in solvent, like "true" conventional dyes but reacts like a "true" pigment when added to the enamel, becoming coated and protected by the polymer system. It is in this unity with the polymer system that the "reaction" with the polymer occurs. Conventional dyes never become part of the enamel. They remain free and exposed to "bleeding" (sensitivity to attack from solvents, enamels, etc., coming into contact with them). It is postulated that the chromium or cobalt ion complex takes part in the catalyzed thermosetting reaction yielding a tightly knitted, non-bleeding system.

The coating compositions of the present invention are characterized by an opalescent appearance and a "stained glass glow color effect". By "stained glass glow color effect" is meant a vibrancy (oscillation) which is sensed and perceived by the viewer, unlike the reaction to normal light. Old stained glass has this glow property. What makes old stained glass windows more beautiful than new stained glass windows is corrosion. Quite so, glass does corrode. With age, the corrosion diffuses the light making each piece glow. Now it is possible to accurately reproduce this old stained glass glow appearance with the coating compositions of the present invention.

The applied coating compositions of the present invention are not moisture sensitive, are less sensitive to criticality of applications, maintain color trueness at all angles (face to flop color travel) can withstand the elements (i.e., sun exposure), do not operate with subtractive color effects when mixed with other pigments, allow low bake repair color matching, and resist settling and chemical (e.g., acid rain) attack, and have an opalescent appearance and a stained glass glow color effect appearance.

It should be noted that while the compositions of the present invention are particularly adapted to original equipment manufacturer coatings for automobiles, one of their advantages is the low bake matching use as thermosetting refinish compositions as well.

Although this invention has been shown and described with respect to detailed embodiments thereof, it will be understood by those skilled in the art that various changed in form and detail thereof may be made

without departing from the spirit and scope of the claimed invention.

## Claims

1. A substrate material coated with a multi-layer coating comprising
an inner pigmented film-forming base coat;
a transparent intermediary film-forming coating applied over the base coat, the intermediary coat comprising iron oxide encapsulated mica pigment in a pigment to binder ratio of about .001 to about .35, and up to about 50 wt.% based upon the weight of the pigment of a metal organic complex dye selected from the group consisting of 1:2 cobalt metal organic complex dyes and 1:2 chrome metal organic complex dyes; and,
an outer, film-forming transparent top coat coating composition applied over the intermediary coating,
the resulting multi-layer coating composition having an opalescent appearance and a stained glass glow color effect.

2. The substrate material of Claim 1 wherein the film forming base coat, intermediary coat and clear top coat comprise a thermoseting acrylic copolymer.

3. A method of coating a substrate with a plurality of layers of film-forming polymer comprising initially applying at least one layer of an inner pigmented film-forming base coat onto the substrate, then applying a transparent intermediary film-forming coating composition over the base coat, wherein said intermediary coating comprises iron oxide encapsulated mica pigment in a pigment to binder ration of about .001 to about .35, and up to about 50 wt.% based upon the weight of the pigment of a metal organic complex dye selected from the group consisting of 1:2 cobalt metal organic complex dyes and 1:2 chrome metal organic complex dyes, and next applying an outer transparent film-forming outer top coat coating composition over said intermediary coating, and then curing or drying the applied coatings, thus producing an opalescent appearance on the substrate material, and, a stained glass glow color effect.

4. The method of Claim 4 wherein the film forming base coat, intermediary coat and clear top coat comprise a thermosetting acrylic copolymer.